# FASCICULE DE BREVET EUROPEEN

(11) **EP 1 120 948 B1**
(45) Date de publication et mention de la délivrance du brevet: **09.04.2008**
(21) Numéro de dépôt: 00403347.8
(22) Date de dépôt: 30.11.2000
(51) Int. Cl.: H04M 1/725, H04Q 7/32

(54) **Téléphone portable utilisé conjointement avec un téléphone sans fil pour une station d'accueil de type DECT**
Mobiltelefon zum benutzen zusammen mit einem drahtlosen Telefon für eine DECT Basisstation
Mobile phone to be used together with a cordless telephone for a DECT base station

(30) Priorité: 24.01.2000 FR 0000837
(43) Date de publication de la demande: 01.08.2001
(73) Titulaire: Alcatel Lucent, 75008 Paris (FR)
(72) Inventeur: Feuchtinger, Stefan, 80687 Munchen (DE); Olivier, François, 67115 Plobsheim (FR); Jurado de Mira, Guillermo, 67370 Truchtersheim (FR); Steffann, Jean-Luc, 67100 Strasbourg (FR)
(74) Mandataire: Sciaux, Edmond

(56) Documents cités:
- EP-A- 0 849 965
- WO-A-95/23485
- DE-A- 4 310 230
- ALVESALO A: "DECT SYSTEM AS AN EXTENSION TO GSM INFRASTRUCTURE" MRC MOBILE RADIO CONFERENCE,XX,XX, 13 novembre 1991 (1991-11-13), pages 201-206, XP000613490

## Description

L'invention concerne un équipement terminal radiotéléphonique d'abonné et plus particulièrement un équipement pour abonné disposant d'un terminal radiotéléphonique de type mobile de réseau ou téléphone sans fil. Elle concerne aussi les terminaux radiotéléphoniques d'abonné destiné à être inclus dans un tel équipement.

Comme il est connu, les terminaux radiotéléphoniques portables, couramment désignés sous le nom de mobile, se présentent sous la forme de boîtiers de dimensions réduites sur lesquels sont disposés des organes de commande manuelle dont le nombre est nécessairement limité en raison du manque de place. Il en est pratiquement de même pour les téléphones sans fil, même si les boîtiers, constituant la partie portable et comportant le combiné audio, peuvent plus facilement avoir de plus grandes dimensions.

Comme il est connu, cette limitation du nombre d'organes, susceptibles d'être mis à la disposition de l'utilisateur sur un terminal radiotéléphonique donné, complique rapidement les manoeuvres à réaliser, par exemple lorsque l'utilisateur désire utiliser un clavier alphanumérique réduit à douze touches d'un terminal portable pour introduire un message alphanumérique, dès que ce message dépasse quelques caractères.

Par ailleurs, tant avec les mobiles qu'avec les combinés de téléphone sans fil, l'utilisateur doit approcher de sa bouche et de son oreille l'appareil qu'il utilise pour parler et entendre, ce qui lui interdit pratiquement de voir les touches et l'écran d'affichage de cet appareil et d'en utiliser le clavier, lorsqu'il parle ou écoute.

Le document EP 0849965 présente un équipement terminal radiotéléponique d'abonné, comportant une station de base DECT, un téléphone sans fil DECT et un téléphone mobile GSM. Ce dernier peut être inséré dans un adaptateur intégré à la station de base GSM. Quand le téléphone mobile GSM est inséré dans la station de base GSM, le signal reçu d'une station de base GSM par ledit téléphone mobile GSM, est converti en signal DECT et émis par l'antenne de la station de base DECT afin de le retransmettre au télépone sans fil DECT. Ainsi il est possible d'établir ou recevoir une communication dans le réseau public fixe ou dans le réseau GSM, en utilisant uniquement un téléphone sans fil DECT pendant que le téléphone mobile GSM est posé sur l'adaptateur. Cette station de base DECT et l'adaptateur qui lui est intégré permettent au téléphone sans fil DECT d'accéder au réseau GSM, mais ils ne résolvent pas le problème de la limitation du nombre d'organes de commande manuelle que comporte ce téléphone sans fil DECT.

La présente invention propose donc un équipement terminal radiotéléphonique pour abonné disposant d'un terminal radiotéléphonique portable, de type mobile de réseau ou téléphone sans fil, qui est prévu pour pouvoir être emporté par un utilisateur lors d'un déplacement et par l'intermédiaire duquel cet utilisateur communique au travers d'un réseau de communication auquel il se relie radiotéléphoniquement par l'intermédiaire d'une station émettrice-réceptrice de relais, et qui est caractérisé en ce qu'il comporte en outre un terminal radiotéléphonique, préférablement prévu pour rester en place, qui est complémentaire du terminal radiotéléphonique portable, et qui est exploitable de manière conjointe avec ce terminal radiotéléphonique portable en liaison avec une station émettrice-réceptrice de relais, dans le cadre d'une communication, établie via cette station, où les fonctionnalités complémentaires des deux terminaux sont susceptibles d'être employées par un même utilisateur ayant simultanément accès aux deux terminaux.

L'invention propose aussi un terminal radiotéléphonique d'abonné, comportant des moyens lui permettant de communiquer radiotéléphoniquement avec une station émettrice-réceptrice de relais donnant accès à un réseau de communication et/ou avec un autre terminal radiotéléphonique.

Selon une caractéristique de l'invention ce terminal comporte des moyens matériels et/ou logiciels lui permettant de communiquer radiotéléphoniquement avec et/ou au travers de ladite station émettrice-réceptrice de relais, soit directement soit par l'intermédiaire d'un autre terminal radiotéléphonique d'abonné avec lequel il est alors directement et radiotéléphoniquement en communication, ainsi que des moyens fonctionnels qui sont complémentaires de ceux que comporte ledit autre terminal radiotéléphonique d'abonné et qui sont organisés pour pouvoir être exploités avec ceux de ce terminal par un même utilisateur, dans le cadre d'une communication établie ou en cours d'établissement avec ou au travers de la station émettrice-réceptrice de relais.

L'invention, ses caractéristiques et ses avantages sont précisés dans la description qui suit en liaison avec les figures évoquées ci-dessous.

La figure 1 présente un schéma de principe illustrant les différentes possibilités de liaison envisagées dans un ensemble de communication, selon l'invention, entre une station radiotéléphonique reliée à un réseau de communication et un équipement terminal radiotéléphonique d'abonné comportant un terminal portable, destiné à suivre les déplacements d'un utilisateur, et un terminal complémentaire, destiné à rester en place.

La figure 2 présente un schéma synoptique relatif à un ensemble de communication où sont plus particulièrement illustrés les éléments constitutifs essentiels d'une station émettrice-réceptrice radiotéléphonique de relais et d'un équipement terminal d'abonné, comportant deux terminaux radiotéléphoniques complémentaires, selon l'invention.

La figure 3 présente un schéma relatif à un ensemble de communication comportant un équipement terminal radiotéléphonique d'abonné, selon l'invention, qui est composé de deux terminaux complémentaires susceptibles d'être exploités comme un terminal unique.

La figure 4 présente un schéma relatif à un ensemble de communication comportant un équipement terminal radiotéléphonique d'abonné relatif à une variante de réalisation de l'invention.

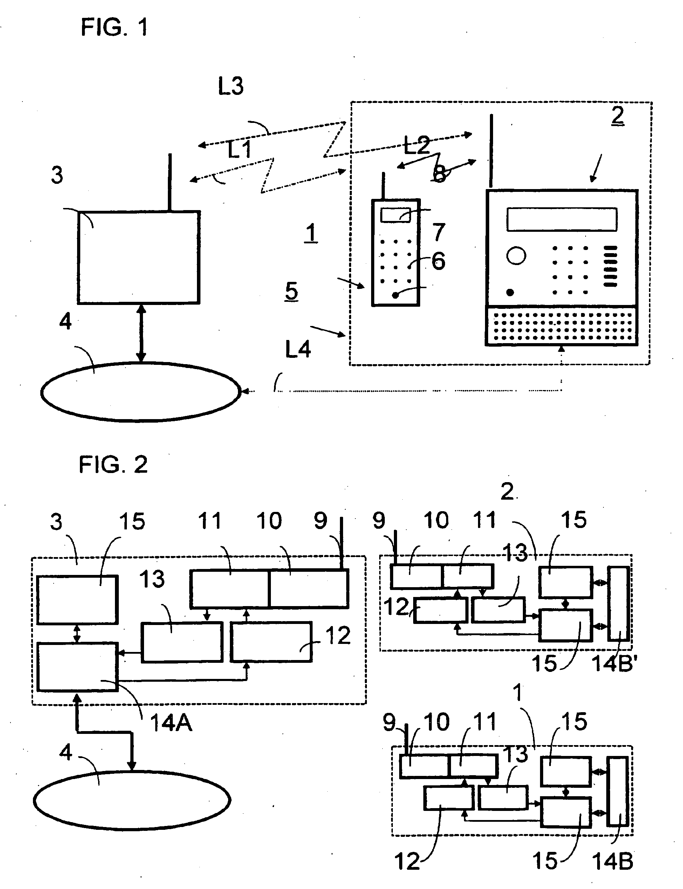

L'équipement terminal d'abonné pour ensemble de communication, présenté sur la figure 1, associe un terminal radiotéléphonique portable 1, de type combiné sans fil ou mobile d'abonné de réseau radiomobile, qui est contenu dans un boîtier prévu pour être amené au voisinage de la tête de l'utilisateur en phase de communication, et un terminal complémentaire 2, usuellement de table ou mural. Ce terminal complémentaire constitue par exemple une station d'accueil. Les deux terminaux sont prévus pour pouvoir être utilisés en association par l'utilisateur, lorsqu'il communique au moyen du terminal portable 1 et au travers d'un réseau de communication 4 auquel ce terminal portable 1 se relie radiotéléphoniquement. Une communication s'établit par l'intermédiaire d'une unité ici appelée station émettrice-réceptrice radiotéléphonique de relais 3, par exemple, soit directement comme symbolisé par la liaison hertzienne L1 pour le terminal portable 1, soit au travers du terminal portable 1 depuis le terminal complémentaire 2, comme symbolisé par les liaisons hertziennes L2 et L1 respectivement établies l'une entre les terminaux 1, 2 et l'autre entre le terminal 1 et la station émettrice-réceptrice de relais 3. Elle peut aussi éventuellement s'établir par une liaison hertzienne L3 établie entre le terminal complémentaire 2 et la station de relais 3. Outre ces diverses possibilités de liaison susceptibles de correspondre à des configurations d'équipement terminal d'abonné différentes et/ou à des conditions d'exploitation différentes. Il est également envisagé que, dans au moins une configuration particulière d'équipement terminal d'abonné, une communication puisse faire intervenir un terminal complémentaire 2 relié au réseau de communication 4 par une liaison câblée L4, par exemple une liaison téléphonique filaire.

Les terminaux 1 et 2 sont supposés former un équipement terminal 5 de communication mis à disposition d'un abonné. Cet équipement est par exemple une unité de téléphonie sans fil de type DECT, CT0 ou CT1, comportant une station d'accueil correspondant au terminal complémentaire 2, ainsi qu'un combiné sans fil équipé de touches de commande et correspondant au terminal portable 1. Le combiné et la station d'accueil sont équipés chacun d'une interface homme-machine qui comporte par exemple un module audio incluant un microphone 6 et un écouteur, un clavier de touches 7 et/ou un écran d'affichage 8, tel qu'un écran LCD.

L'équipent terminal 5 peut aussi être une unité radiotéléphonique d'abonné d'un réseau radiotéléphonique et en particulier d'un réseau radiomobile, tel qu'un réseau GSM. Le terminal portable 1 est alors un réel appareil de poche, ou mobile, qui peut communiquer par voie radiotéléphonique avec une station émettrice-réceptrice de relais, telle que 3, et éventuellement avec un terminal complémentaire 2, suivant la configuration d'équipement terminal choisie. Cette possibilité de communication est fonction de la situation du terminal portable 1 et de ses possibilités d'émission-réception par rapport au terminal complémentaire 2 et à la station émettrice-réceptrice de relais auprès de laquelle il se localise, lorsqu'il est à portée radio convenable.

Les éléments constitutifs essentiels d'une station émettrice-réceptrice de relais radiotéléphonique 3 et d'un équipement terminal d'abonné 5 incluant deux terminaux radiotéléphoniques complémentaires d'abonné conjointement exploitables, sont schématisés sur la figure 2. Comme déjà indiqué, cet équipement est supposé obtenu par association d'un terminal portable 1, prévu pour accompagner l'utilisateur dans ses déplacements, et d'un terminal complémentaire 2, prévu pour être laissé en place.

Chacune des trois entités que constituent la station de relais et les terminaux radiotéléphoniques est prévue pour émettre et recevoir des signaux, transmis par voie hertzienne par l'intermédiaire d'une antenne individuelle 9, dans le cadre de communications radiotéléphoniques et pour l'établissement et la rupture de telles communications. A cet effet, chaque antenne est reliée par un filtre radiofréquence 10 et via un commutateur d'antenne 11, individuels, d'une part, à un module d'émission 12 et, d'autre part, à un module de réception 13 de l'entité qui la comporte. Le module d'émission 12 et le module de réception 13 de chaque entité sont reliés à une interface de communication spécialisée. Cette interface de communication est une interface 14A d'accès à un réseau de communication 4, lorsque l'entité considérée est une station émettrice-réceptrice de relais 3, telle qu'envisagée ci-dessus. C'est une interface 14B, ou 14B', de communication homme-machine, lorsque l'entité considérée correspond à l'un ou l'autre des deux terminaux complémentaires d'abonné 1, 2. Comme déjà indiqué plus haut, les interfaces 14B, 14B' des terminaux complémentaires 1 et 2 se différencient pratiquement l'une de l'autre par les moyens d'interaction qu'elles mettent à disposition de l'utilisateur. Les moyens d'interaction et notamment de commande et de visualisation du terminal complémentaire 2, prévu pour être laisser en place, sont préférablement plus extensifs et/ou développés que ceux du terminal 1 auxquels ils peuvent se substituer ou qu'ils peuvent permettre de complémenter pour des opérations particulières d'exploitation. Comme il est par ailleurs connu, les entités que constituent la station de relais 3 et les terminaux 1 et 2 sont respectivement gérées chacune par une unité logique spécifiquement programmée qui supervise l'ensemble des opérations effectuées au niveau de l'entité qui la comporte, en liaison avec les logiques de gestion des autres entités, dans le cadre des communications radiotéléphoniques à établir, établies, ou à rompre.

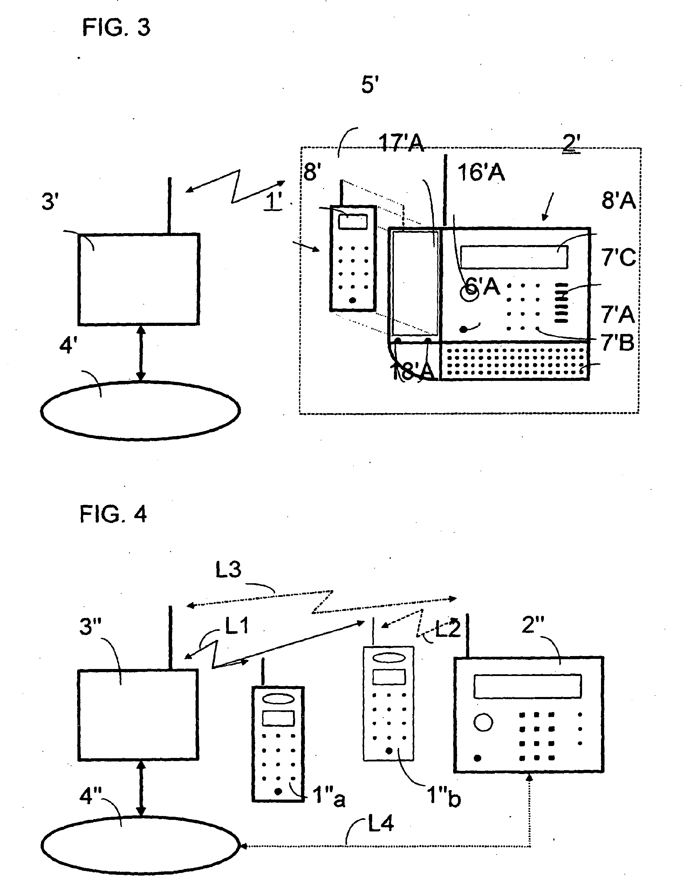

Selon une première forme de réalisation de l'invention, plus particulièrement schématisée en relation avec la figure 3, il est prévu qu'un terminal portable 1' et un terminal complémentaire 2' se présentant, l'un sous la forme d'un mobile et l'autre d'une station d'accueil, prévue pour ce mobile, soient associés à une même station de base émettrice-réceptrice radiotéléphonique fixe 3' vis-à-vis de laquelle ces terminaux 1 et 2 forment un même équipement terminal 5' disposant d'un numéro d'appel unique. La logique de gestion de la station émettrice-réceptrice de relais 3' est organisée et notamment programmée de manière à prendre en compte les divers signaux radiotéléphoniques produits par le terminal portable 1' et par le terminal complémentaire 2', comme s'ils provenaient d'un même terminal. Chacun des terminaux 1' et 2' est organisé et a une unité de gestion spécifiquement programmée pour prendre en compte ceux des signaux qui lui sont plus particulièrement destinés parmi l'ensemble des signaux radiotéléphoniques qui sont transmis par la station émettrice-réceptrice de relais 3' à destination de l'équipement terminal 5' que ces deux terminaux 1' et 2' constituent, lorsqu'ils sont à proximité radio l'un de l'autre. La programmation d'au moins l'un des deux terminaux 1 et 2 est susceptible d'être complétée à l'occasion de leur mise en service, ou encore par l'utilisateur lui-même, éventuellement en liaison avec un spécialiste, en fonction de ses besoins. Cette programmation est ici supposée prévue pour que les deux terminaux puissent être simultanément actifs dans le cadre d'une même communication et plus particulièrement pour qu'au moins certains des signaux émis vers la station émettrice-réceptrice de relais puissent indifféremment parvenir de l'un ou de l'autre de ces deux terminaux 1' et 2' au cours d'une communication établie. Il est alors prévu que ces terminaux soient en des positions respectives telles qu'ils puissent être simultanément exploités par le même utilisateur, à des fins de complémentarité. Comme il est connu, pour des raisons pratiques notamment en matière de portabilité, il n'est généralement prévu qu'un afficheur de taille limitée et/ou un nombre de touches de commande réduit sur un terminal portable constitué par un mobile, du genre GSM, ou par un combiné sans fil. Ces limitations en matière de taille d'écran et de nombre de touches sont beaucoup plus lâches dans le cas d'un terminal 2' de table ou mural, comme peut notamment l'être une station d'accueil. Ainsi dans l'exemple présenté sur la figure 3, il est supposé que la station d'accueil constituant le terminal 2' comporte une interface homme-machine développée incluant divers organes d'interface, par exemple un clavier de numérotation téléphonique à douze touches 7'A, un clavier alphanumérique 7'B de saisie de texte, une série de touches spécialisées de commande 7'C, un afficheur 8'A, dont la taille est supposée nettement supérieure à celle d'un afficheur 8' de mobile, et des moyens audio de capture et de restitution de son, symbolisés ici par un microphone 6'A et un haut-parleur 16'A. Dans la mesure où deux terminaux 1' et 2' d'un même équipement terminal 5' sont constitués de la manière évoquée ci-dessus et sont simultanément activés, il est prévu qu'ils soient programmés de manière que les organes de l'un puissent être utilisés au profit de l'autre, sur choix de l'utilisateur et en fonction de ses besoins. Cette possibilité peut notamment être utilisée pour obtenir l'affichage d'un message long sur l'afficheur 8'A de la station d'accueil constituant le terminal 2', lorsque les capacités d'affichage de celui-ci sont supérieures à celles de l'afficheur 8' prévu au niveau du terminal portable 1'.

Il est aussi prévu d'exploiter les touches de la station d'accueil, plutôt que celle du terminal portable 1', dès que ceci permet de simplifier les opérations à réaliser et par exemple pour entrer le texte d'un message à transmettre, via la station émettrice-réceptrice de relais 3', vers un correspondant distant accessible par l'intermédiaire du réseau de communication 4'.

Il est ainsi envisageable d'accéder à une pluralité de services téléphoniques auquel il serait difficile, voire pratiquement impossible, d'accéder au moyen d'un terminal portable 1', pris isolément, ces accès étant rendus possible dans le cadre d'un équipement terminal d'abonné où ce terminal 1' est associé à un terminal complémentaire 2', spécifiquement adapté et par exemple à une station d'accueil prévue pour ce terminal 1'. Ces possibilités d'accès sont susceptibles d'être exploitées pour des services divers et notamment pour des services vocaux ou de données, ou encore à des fins de signalisation, de supervision et/ou autres.

Dans l'exemple de réalisation schématisé sur la figure 3, il est prévu que la station d'accueil, constituant un terminal 2', soit agencée pour recevoir un terminal portable 1' qui peut être placé dans une cavité de logement 17'A, lorsqu'il n'est pas utilisé. Cette cavité est ici supposée ménagée dans la face avant de ladite station d'accueil à proximité des organes d'interface homme-machine. Il est éventuellement prévu des moyens de connexion électrique 18'A, au niveau de la cavité pour alimenter un terminal portable 1', en vue d'assurer une recharge de l'accumulateur électrique que comporte ce terminal 1' pour son alimentation en énergie.

A partir du moment où le terminal portable 1' est sorti hors de la cavité de logement 17'A de la station d'accueil, où il est prévu qu'il puisse être rangé, il est susceptible d'être plus ou moins éloigné de cette station et il peut se trouver dans des conditions telles qu'il ne soit plus possible à l'utilisateur de l'exploiter conjointement avec sa station d'accueil.

Dans une forme préférée de réalisation, il est donc prévu des moyens au niveau des deux terminaux, tels 1 et 2 ou 1' et 2', constituant un même équipement terminal pour permettre de déterminer au niveau d'au moins l'un d'entre eux si l'autre est situé, ou non, à une distance leur permettant de fonctionner conjointement et en complément l'un de l'autre.

L'un au moins des deux terminaux d'un équipement terminal 5 ou 5', tel qu'envisagé ci-dessus, est alors doté d'un module d'émission incluant des moyens lui permettant d'émettre une porteuse de balisage dont la puissance fixée peut préférablement être réglée. L'autre terminal comporte un module de réception doté de moyens de détection de ladite porteuse de balisage, qui autorisent une exploitation conjointe du terminal doté de ces moyens et du terminal qui émet la porteuse de balisage, par un même utilisateur, lorsque ladite porteuse est détectée. Les moyens d'émission de porteuse de balisage d'un équipement terminal sont par exemple incorporés dans celui des terminaux qui constitue la station d'accueil de cet équipement, l'autre terminal comportant alors des moyens de détection de ladite porteuse. Une inversion des rôles joués par les terminaux est également réalisable. Des moyens d'émission et des moyens de détection de porteuse de balisage sont alors prévus dans chacun des deux terminaux d'un même équipement terminal. Chaque terminal émet alors une porteuse de balisage différente et dispose de moyens de détection plus spécialement calés sur la porteuse de balisage de l'autre terminal.

Dans une forme préférée de réalisation, la station d'accueil d'un équipement terminal est programmée pour agir comme un classique terminal DECT, mis à part le fait qu'en l'absence de communication, elle émet en permanence une porteuse de balisage qui est analogue à la porteuse fictive émise par un terminal constituant une partie radio fixe RFP de système DECT. Cette porteuse contient un identifiant de porteuse RFPI qui est émis par la station d'accueil pour permettre au terminal portable de la reconnaître, s'il existe d'autres équipements et en particulier d'autres stations d'accueil, situées à portée radio, qui peuvent émettre la même porteuse.

Dans l'exemple de réalisation envisagé ci-dessus, il est prévu qu'un terminal portable soit programmé pour agir comme un classique terminal DECT, mis à part le fait que dans le cadre du balayage qu'il effectue dans son environnement, il recherche une fréquence de balisage propre à la station d'accueil avec laquelle il forme un équipement terminal déterminé, lorsque les signaux radiotéléphoniques provenant de cette station sont reçus avec un niveau de puissance dépassant une valeur de seuil minimal prédéterminée. Il est bien entendu aussi prévu de permettre à un même terminal portable et plus particulièrement à un mobile GSM, de coopérer avec une parmi plusieurs stations d'accueil possibles, après un choix effectué par exemple en fonction des niveaux respectifs des signaux reçus. Il est aussi prévu en variante que terminal portable 1' et station d'accueil 2', qui forment un équipement terminal, dans des conditions de portée radio déterminées, disposent de moyens permettant à chacun de déterminer symétriquement le niveau des signaux émis par l'autre de manière à leur permettre de communiquer conjointement, si cela est possible et si besoin est.

La détection d'une station d'accueil 2', possédant les caractéristiques requises en matière d'identité et de puissance, est supposée utilisée en interne par le terminal portable 1', et/ou communiquée par voie radiotéléphonique vers la station émettrice-réceptrice de relais 3', conjointement exploitée par ce terminal portable 1' et par cette station d'accueil 2' à l'occasion d'une communication radiotéléphonique déterminée. Si la détection n'est plus obtenue, le terminal portable 1' prend en compte en interne, cette absence de détection et en informe préférablement la station émettrice-réceptrice de relais 3' avec laquelle il est en liaison.

La station émettrice-réceptrice de relais 3' est susceptible d'être exploitée pour indiquer à la station d'accueil 2' que sa fréquence de balisage a été détectée par le terminal portable 1', comme radiotéléphoniquement signalé par ce terminal à cette station de relais. Il est également prévu que cette information émanant du terminal soit utilisée pour initier un programme de coopération entre la station émettrice-réceptrice de relais 3', le terminal portable 1' et la station d'accueil 2'.

Selon une variante de réalisation de l'invention, plus particulièrement schématisée en relation avec la figure 4 , il est prévu de substituer un terminal radiotéléphonique portable, prévu pour pouvoir accompagner un utilisateur dans ses déplacements et constitué par un combiné audio sans fil ou un mobile d'abonné de réseau radiomobile, au combiné raccordé par fil d'un terminal destiné à rester en place et considéré comme complémentaire du premier. Les déplacements du terminal radiotéléphonique portable sont ici symbolisés par deux positions 1"a et 1"b, pour lesquelles ce terminal est supposé à portée radio d'une station émettrice-réceptrice de relais radiotéléphonique 3" donnant accès à un réseau de commutation 4" par l'intermédiaire duquel un utilisateur du terminal peut établir des communications avec des utilisateurs distants reliés à ce réseau, comme symbolisé par la liaison radiotéléphonique L1. Dans la position 1"b, il est supposé que le terminal radiotéléphonique portable est aussi à portée radio d'un terminal complémentaire 2" avec lequel il peut alors radiotéléphoniquement communiquer, comme symbolisé par la liaison radiotéléphonique L2.

Dans une forme de réalisation, il est prévu que le terminal radiotéléphonique portable soit agencé et programmé de manière à pouvoir servir de relais entre le terminal complémentaire 2" et la station émettrice-réceptrice de relais 3" pour des échanges de signaux de communication et/ou de signalisation par l'intermédiaire des deux liaisons radiotéléphoniques L2 et L1 mises en série au niveau du terminal radiotéléphonique portable, lorsque celui-ci est à portée radio du terminal complémentaire 2" et de la station de relais 3". Cette dernière est supposée disposer de moyens d'émission et de réception radio plus performants que ceux des terminaux et en particulier que ceux du terminal complémentaire 2". L'utilisateur du terminal radiotéléphonique portable peut alors bénéficier des facilités qu'offre le terminal complémentaire 2" en plus de celles dont il dispose, lorsqu'il est à portée radio de ce terminal complémentaire. Comme déjà évoqué plus haut ces facilités peuvent notamment se traduire par des moyens d'interface homme-machine plus développés au niveau du terminal supplémentaire.

Dans une forme de réalisation, il est prévu que terminal radiotéléphonique portable comporte des modules d'émission et de réception qui lui permettent de communiquer simultanément et bidirectionnellement, par une liaison radiotéléphonique L1, avec une station émettrice-réceptrice de relais 3" auprès de laquelle il est au moins temporairement localisé et, par une liaison radiotéléphonique L2, avec un terminal complémentaire 2" à portée radio convenable duquel il est situé. Le fonctionnement du terminal complémentaire 2", en liaison avec la station émettrice-réceptrice de relais 3", est alors totalement dépendant de la présence du terminal radiotéléphonique portable à portée radio convenable du terminal complémentaire 2", étant supposé que le terminal radiotéléphonique portable est alors aussi à portée radio convenable de la station émettrice-réceptrice de relais 3".

Selon une variante de réalisation, le terminal complémentaire 2" peut alternativement être prévu pour pouvoir directement communiquer, notamment à des fins de signalisation, soit par une liaison radiotéléphonique bidirectionnelle L3 avec une station émettrice-réceptrice de relais 3" à portée radio convenable de laquelle il est situé, de manière à permettre l'établissement de communications par l'intermédiaire du réseau de communication 4", soit alternativement par une liaison câblée L4 le connectant au réseau de communication 4" cette liaison étant par exemple une classique liaison téléphonique. Le terminal complémentaire 2" est alors équipé de moyens d'émission et de réception supplémentaires, à cette fin, ces moyens étant téléphoniques ou radiotéléphoniques, suivant le cas.

Dans les différentes variantes de réalisation proposées, le terminal complémentaire est généralement prévu pour faciliter et/ou permettre de réaliser des opérations difficiles ou impossibles à réaliser à l'aide du seul terminal radiotéléphonique portable qui s'associe à lui pour former une unité terminale radiotéléphonique d'abonné où les deux terminaux sont simultanément exploitables par un même utilisateur.

## Revendications

1. Equipement terminal radiotéléphonique pour abonné disposant d'un terminal radiotéléphonique portable (1), de type mobile de réseau ou téléphone sans fil, qui est prévu pour pouvoir être emporté par un utilisateur lors d'un déplacement, et par l'intermédiaire duquel cet utilisateur communique au travers d'un réseau de communication (4) auquel il se relie radiotéléphoniquement par intermédiaire d'une station émettrice-réceptrice de relais (3), **caractérisé en ce qu'**il comporte un terminal radiotéléphonique dit complémentaire (2), associé au terminal radiotéléphonique portable et préférablement prévu pour rester en place, qui est exploitable de manière conjointe avec ledit terminal radiotéléphonique portable en liaison avec la station émettrice-réceptrice de relais, dans le cadre d'une communication, établie via station, les fonctionnalités des deux terminaux (1, 2) sont complémentaires et sont susceptibles d'être employées par un même utilisateur ayant simultanément accès aux deux terminaux.

2. Equipement, selon la revendication 1, comportant un terminal radiotéléphonique portable (1) et un terminal radiotétéphonique complémentaire (2) équipés de moyens d'interface homme-machine (14B, 14B') et/ou de moyens logiciels qui sont au moins partiellement complémentaires.

3. Equipement, selon l'une des revendications 1, 2, dons lequel le terminal radiotéléphonique portable et le terminal radiotéléphonique complémentaire sont dotés de moyens d'émission-réception (10, 11) et de moyens logiciels leur réceptrice (3) de relais d'un réseau de communication (4) chacun par une liaison radiotéléphonique (L1, L3), différente, dans le cadre d'une communication où est impliqué le terminal radiotéléphonique portable.

4. Equipement, selon l'une des revendications 1, 2, dans lequel le terminal radiotéléphonique portable est doté de moyens d'émission-réception (10, 11) lui permettant de communiquer radiotéléphoniquement d'une part avec une station émettrice-réceptrice (3) de relais d'un réseau de communication (4) par une première liaison (L1) et d'autre part avec un terminal radiotéléphonique complémentaire de lui-même par une seconde liaison (L2), lorsqu'il est à portée radio convenable de l'une et de l'autre.

5. Equipement, selon la revendication 4, dans lequel le terminal radiotéléphonique portable est doté de moyens d'émission-réception et de moyens logiciels lui permettant à la station émettrice-réceptrice de relais(3") et au terminal complémentaire avec lesquels il communique radiotéléphoniquement de communiquer entre eux par son intermédiaire et via les liaisons radiotéléphoniques (L1, L2) qui l'unissent sélectivement à chacun d'eux.

6. Equipement, selon la revendication 4, dans lequel le terminal radiotéléphonique complémentaire d'un terminal radiotéléphonique portable est relié par une liaison câblée (L4) au réseau de communication auquel ce terminal portable accède radiotéléphoniquement, via une station émettrice-réceptrice de relais (3).

7. Terminal radiotéléphonique d'abonné (1 ou 2) d'un équipement terminal radiotéléphonique, le terminal radiotéléphonique d'abonné (1 ou 2) comportant des moyens lui permettant de communiquer radiotéléphoniquement avec une station émettrice-réceptrice de relais radiotéléphonique d'accès (3) à un réseau de communication (4) et/ou avec un outré terminal radiotéléphonique (2 ou 1), **caractérisé en ce qu'**il comporte des moyens matériels et/ou logiciels (9 à 13 et 15) lui permettant de communiquer radiotéléphoniquement avec et/ou au travers de ladite station émettrice-réceptrice de relais, soit directement soit par l'intermédiaire d'un autre terminal radiotéléphonique (1) d'abonné, avec lequel il est alors directement et radiotéléphoniquement en communication, ainsi que des moyens fonctionnels (14B ou 14B') qui sont complémentaires de ceux que comporte ledit autre terminal radiotéléphonique, dit complémentaire, et qui sont organisés pour pouvoir être exploités avec ceux de ce terminal complémentaire par un même utilisateur, dans le cadre d'une communication établie ou en cours d'établissement avec ou au travers de la station émettrice-réceptrice de relais.

8. Terminal radiotéléphonique d'abonné, selon la revendication 7, comportant des moyens d'émission (12) qui lui permettent d'émettre une porteuse de balisage avec une puissance déterminée modifiable à destination d'un autre terminal radiotéléphonique doté de moyens lui permettant de détecter cette porteuse, lorsqu'il est à portée radio du terminal qui comporte les moyens d'émission, de manière à permettre aux deux terminaux de communiquer simultanément et conjointement avec une station émetirice-réceptrice de relais (3) d'un réseau de communication, comme un terminal disposant de l'ensemble des fonctionnalités propres à chacun de ces terminaux.

9. Terminal radiotéléphonique d'abonné, selon l'une des revendications 7, 8 comportant des moyens de réception (11) qui lui permettent de détecter une porteuse de balisage émise par un terminal radiotéléphonique d'abonné, lorsqu'i en est à portée radio, de manière à permettre aux deux terminaux de communiquer simultanément et conjointement avec une station émettrice-réceptrice de relais (3) d'un réseau de communication, comme un terminal disposant de l'ensemble des fonctionnalités propres à chacun de ces terminaux.

10. Terminal radiotéléphonique d'abonné, selon l'une des revendications 7, 9, et plus particulièrement terminal radiotéléphonique portable et prévu pour accompagner l'utilisateur, comportant des moyens d'émission et de réception (11, 12) lui permettant de communiquer simultanément et radiotéléphoniquement avec une station émettrice-réceptrice de relais (3) et avec un terminal radiotéléphonique complémentaire, préférablement laissé en place, en servant de relais de communication pour ce terminal complémentaire, lorsqu'il est à portée radio de l'une et de l'autre.

11. Terminal radiotéléphonique d'abonné, selon l'une des revendications 7, 8, 9, qui est prévu pour être laissé en place, et qui comporte une liaison câblée (L4) lui permettant d'établir une communication au travers du réseau de communication (4).

12. Terminal radiotéléphonique d'abonné (1' ou 2'), selon l'une des revendications 7, 8 ou 9, dans lequel il est prévu des moyens matériels et/ou logiciels lui permettant de communiquer radiotéléphoniquement avec et par l'intermédiaire d'une station émettrice-réceptrice radiotéléphonique de relais (3) d'accès à un réseau de communication (4) conjointement avec un terminal radiotéléphonique complémentaire (2' ou 1') au cours d'une communication au cours de laquelle les moyens fonctionnels d'interface homme-machine (14B ou 14B') qu'il comporte et qui sont complémentaires de ceux (14B' ou 14B) que comporte le terminal complémentaire sont exploitables conjointement avec ceux de cet autre terminal par un même utilisateur dans le cadre de la communication établie , à établir ou à rompre.

## Claims

1. Radiotelephone terminal unit for a subscriber who has a portable radiotelephone terminal (1) of the mobile network type or cordless telephone type which is adapted to be carried around by a user and by means of which said user communicates via a communication network (4) to which said user is connected by radio via a relay transceiver station (3), which unit is **characterised in that** it includes a radiotelephone terminal (2) which is complementary to the portable radiotelephone terminal, preferably adapted to remain in place, and can be used conjointly with said portable radiotelephone terminal when connected to the relay transceiver station by a call set up via said station, and in which unit complementary functions of the two terminals (1, 2) can be employed by the same user having simultaneous access to both terminals.

2. Unit according to claim 1 including a portable radiotelephone terminal (1) and a complementary radiotelephone terminal (2) equipped with man-machine interface means (14B, 14B') and/or software means which are at least partly complementary.

3. Unit according to claim 1 or 2 wherein the portable radiotelephone terminal and the complementary radiotelephone terminal include transceiver means (10, 11) and software means enabling them to communicate by radio with a relay transceiver station (3) of a communication network (4) via a respective different radiotelephone link (L1, L3) during a call involving the portable radiotelephone terminal.

4. Unit according to claim 1 or 2 wherein the portable radiotelephone terminal includes transceiver means (10, 11) enabling it to communicate by radio with a relay transceiver station (3) of a communication network (4) via a first link (L1) and with a radiotelephone terminal complementary to itself via a second link (L2) when it is within radio range of both.

5. Unit according to claim 4 wherein the portable radiotelephone terminal includes transceiver means and software means enabling the relay transceiver station (3") and the complementary terminal with which it is communicating by radiotelephone to communicate with each other via it and via the radiotelephone links (L1, L2) which selectively connect it to each of them.

6. Unit according to claim 4 wherein the radiotelephone terminal complementary to a portable radiotelephone terminal is connected by a cable link (L4) to the communication network to which said mobile terminal has radio access via a relay transceiver station (3).

7. Subscriber radiotelephone terminal (1 or 2) of a radiotelephone terminal unit, the subscriber radiotelephone terminal (1 or 2) including means enabling it to communicate by radio with a radiotelephone relay transceiver station (3) providing access to a communication network (4) and/or with another radiotelephone terminal (2 or 1), which subscriber radiotelephone terminal is **characterised in that** it includes hardware and/or software means (9 to 13 and 15) enabling it to communicate by radio with and/or via said relay transceiver station either directly or via another subscriber radiotelephone terminal (1) with which it is in direct radio communication, and functional means (14B or 14B') which are complementary to those of said complementary other radiotelephone terminal and organised so that they can be used with those of said complementary terminal by the same user during a call already set up or being set up with or via the relay transceiver station.

8. Subscriber radiotelephone terminal according to claim 7 including transmitter means (12) enabling it to transmit a broadcast control channel carrier with a particular power that can be modified to another radiotelephone terminal including means enabling it to detect said carrier when it is within radio range of the terminal which includes the transmitter means, so as to enable the two terminals to communicate simultaneously and conjointly with a relay transceiver station (3) of a communication network as a terminal having all the functions specific to each of said terminals.

9. Subscriber radiotelephone terminal according to claim 7 or 8 including receiver means (11) enabling it to detect a broadcast control channel carrier transmitted by a subscriber radiotelephone terminal when it is within radio range thereof to enable the two terminals to communicate simultaneously and conjointly with a relay transceiver station (3) of a communication network as a terminal having all of the functions specific to each of said terminals.

10. Subscriber radiotelephone terminal according to claim 7 or 9 taking the more particular form of a portable radiotelephone terminal which is intended to be carried around by the user and includes transceiver means (11, 12) enabling it to communicate simultaneously by radio with a relay transceiver station (3) and with a complementary radiotelephone terminal, which is preferably intended to be left in place, serving as a communication relay for said complementary terminal, when it is within radio range of both.

11. Subscriber radiotelephone terminal according to any of claims 7, 8 or 9 when adapted to be left in place and including a cable link (L4) enabling it to set up a call via the communication network (4).

12. Subscriber radiotelephone terminal (1' or 2') according to any of claims 7, 8 or 9, including hardware and/or software means enabling it to communicate by radio with and via a relay radiotelephone transceiver station (3) providing access to a communication network (4) conjointly with a complementary radiotelephone terminal (2' or 1') during a call in the course of which its functional man-machine interface means (14B or 14B'), which complement those (14B or 14B') of the complementary terminal, can be used in conjunction with those of said other terminal by the same user during the call set up, to be set up or to be cleared down.

## Patentansprüche

1. Funktelefonendausrüstung für Teilnehmer, die über ein mobiles Funktelefonendgerät (1) des Typs Netzmobiltelefon oder drahtloses Telefon verfügt, das dafür vorgesehen ist, vom Benutzer mitgenommen zu werden, und vermittels derer dieser Nutzer durch ein Kommunikationsnetz (4) kommuniziert, an das er sich funktelefonisch mittels einer Sende-Empfangs-Relaisstation (3) anschließt, und **dadurch gekennzeichnet ist, dass** sie ein so genanntes ergänzendes Funktelefonendgerät (2) einschließt, das mit dem mobilen Funktelefonendgerät verknüpft ist und vorzugsweise zum stationären Verbleib vorgesehen ist, und zusammen mit diesem mobilen Funktelefonendgerät in Verbindung mit der Sende-Empfangs-Relaisstation betrieben werden kann, im Rahmen einer Verbindung, die via diese Station hergestellt wird, wobei die Funktionalitäten der beiden Endgeräte (1, 2) ergänzend sind und von ein und demselben Nutzer genutzt werden können, der gleichzeitig Zugriff auf die beiden Endgeräte hat.

2. Ausrüstung gemäß Anspruch 1, die ein mobiles Funktelefonendgerät (1) und ein ergänzendes Funktelefonendgerät (2) einschließt, die mit Schnittstellenmitteln Mensch-Maschine (14B, 14B') und/oder Softwaremitteln ausgestattet sind, die zumindest teilweise ergänzend sind.

3. Ausrüstung gemäß Anspruch 1 oder 2, bei der das mobile funktelefonische Endgerät und das ergänzende funktelefonische Endgerät mit Mitteln zum Senden/Empfangen (10, 11) und Softwaremitteln ausgestattet sind, die es ihnen ermöglichen, funktelefonisch mit einer Sende-Empfangs-Relaisstation (3) eines Kommunikationsnetzes (4) jeweils über eine andere funktelefonische Verbindung (L1, L3) zu kommunizieren, im Rahmen einer Verbindung, wo das mobile funktelefonische Endgerät impliziert ist.

4. Ausrüstung gemäß Anspruch 1 oder 2, bei der das mobile funktelefonische Endgerät mit Mitteln zum Senden/Empfangen (10, 11) ausgestattet ist, die es ihm ermöglichen, zum einen funktelefonisch mit einer Sende-Empfangs-Relaisstation (3) eines Kommunikationsnetzes (4) über eine erste Verbindung (L1) zu kommunizieren, und zum anderen mit einem es ergänzenden funktelefonischen Endgerät über eine zweite Verbindung (L2), wenn es sich in passender Funkreichweite vom einen und vom anderen befindet.

5. Ausrüstung gemäß Anspruch 4, bei der das mobile funktelefonische Endgerät mit Mitteln zum Senden/Empfangen und Softwaremitteln ausgestattet ist, die es der Sende-Empfangs-Relaisstation (3") und dem ergänzenden Endgerät, mit denen es funktelefonisch kommuniziert, ermöglichen, untereinander zu kommunizieren, vermittels seiner selbst und via die funktelefonischen Verbindungen (L1, L2), die es selektiv jeweils mit ihnen verbinden.

6. Ausrüstung gemäß Anspruch 4, bei der das ergänzende funktelefonische Endgerät eines mobilen funktelefonischen Endgeräts über eine Leitungsverbindung (L4) mit dem Kommunikationsnetz verbunden ist, auf das dieses mobile Endgerät funktelefonisch via eine Sende-Empfangs-Relaisstation (3) zugreift.

7. Teilnehmerfunktelefonendgerät (1 oder 2) einer funktelefonischen Endausrüstung, wobei das Teilnehmerfunktelefonendgerät (1 oder 2) Mittel enthält, die es ihm ermöglichen, funktelefonisch mit einer funktelefonischen Sende-Empfangs-Relaisstation für den Zugang (3) zu einem Kommunikationsnetz (4) zu kommunizieren und/oder mit einem anderen funktelefonischen Endgerät (2 oder 1), **dadurch gekennzeichnet, dass** es Hardware- und/oder Softwaremittel (9 bis 13 und 15) einschließt, die es ihm ermöglichen, funktelefonisch mit dieser und/oder durch diese Sende-Empfangs-Relaisstation entweder direkt oder vermittels eines anderen funktelefonischen Teilnehmerendgeräts (1) zu kommunizieren, mit dem es dann direkt und funktelefonisch in Verbindung steht, sowie funktionelle Mittel (14B oder 14B'), die diejenigen ergänzen, die das andere, das so genannte ergänzende funktelefonische Endgerät einschließt, und die so aufgebaut sind, dass sie von ein und demselben Nutzer mit denjenigen dieses ergänzenden Endgeräts im Rahmen einer aufgebauten Verbindung oder einer Verbindung, die sich im Aufbau befindet, mit dieser oder durch diese Sende-Empfangs-Relaisstation genutzt werden können.

8. Teilnehmerfunktelefonendgerät gemäß Anspruch 7, das Mittel zum Senden (12) enthält, die es ihm ermöglichen, eine Auszeichnungsträgerwelle mit einer veränderbaren bestimmten Leistung an ein anderes funktelefonisches Endgerät zu senden, das mit Mitteln ausgestattet ist, die es ihm ermöglichen, diese Trägerwelle zu erfassen, wenn es sich im Funkbereich des Endgeräts befindet, das die Mittel zum Senden einschließt, um es den beiden Endgeräten zu ermöglichen, gleichzeitig und zusammen mit einer Sende-Empfangs-Relaisstation (3) eines Kommunikationsnetzes wie ein Endgerät zu kommunizieren, das über sämtliche Funktionalitäten verfügt, die jedem dieser Endgeräte eigen sind.

9. Teilnehmerfunktelefonendgerät gemäß einem der Ansprüche 7 oder 8, das Mittel zum Empfangen (11) enthält, die es ihm ermöglichen, eine von einem Teilnehmerfunktelefonendgerät gesendete Auszeichnungsträgerwelle zu erfassen, wenn es sich in dessen Funkbereich befindet, um es den beiden Endgeräten zu ermöglichen, gleichzeitig und zusammen mit einer Sende-Empfangs-Relaisstation (3) eines Kommunikationsnetzes wie ein Endgerät zu kommunizieren, das über sämtliche Funktionalitäten verfügt, die jedem dieser Endgeräte eigen sind.

10. Teilnehmerfunktelefonendgerät gemäß einem der Ansprüche 7 und 9 und insbesondere mobiles funktelefonisches Endgerät, das der Nutzer mitnehmen kann, und das Mittel zum Senden und Empfangen (11, 12) einschließt, die es ihm ermöglichen gleichzeitig und funktelefonisch mit einer Sende-Empfangs-Relaisstation (3) und mit einem ergänzenden funktelefonischen Endgerät, das vorzugsweise vor Ort belassen wird, zu kommunizieren, wobei es für dieses ergänzende Endgerät als Kommunikationsrelais dient, wenn es sich im Funkbereich des einen und des anderen befindet.

11. Teilnehmerfunktelefonendgerät gemäß einem der Ansprüche 7, 8, 9, das für den Verbleib vor Ort vorgesehen ist und eine Leitungsverbindung (L4) einschließt, die es ihm ermöglicht, eine Verbindung über das Kommunikationsnetz (4) herzustellen.

12. Teilnehmerfunktelefonendgerät (1' oder 2") gemäß einem der Ansprüche 7, 8 oder 9, bei dem Hardware- und/oder Softwaremittel vorgesehen werden, die es ihm ermöglichen, funktelefonisch mit und vermittels einer funktelefonischen Sende-Empfangs-Relaisstation (3) für den Zugang zu einem Kommunikationsnetz (4) zusammen mit einem ergänzenden funktelefonischen Endgerät (2' oder 1') im Verlauf einer Verbindung zu kommunizieren, in deren Verlauf die funktionellen Schnittstellenmittel Mensch-Maschine (14B oder 14B'), die es einschließt, und die diejenigen (14B' oder 14B) ergänzen, die das ergänzende Endgerät einschließt, gemeinsam mit denen dieses anderen Endgeräts von ein und demselben Nutzer im Rahmen der Verbindung, die aufgebaut ist, die aufzubauen ist oder die unterbrechen werden soll, nutzbar ist.
